# EUROPÄISCHE PATENTSCHRIFT

(11) **EP 2 504 162 B1**
(45) Veröffentlichungstag und Bekanntmachung des Hinweises auf die Patenterteilung: **26.04.2017**
(21) Anmeldenummer: 10781509.4
(22) Anmeldetag: 23.11.2010
(51) Int. Cl.: B32B 9/00, B32B 15/00, B60J 5/04

(54) **KRAFTFAHRZEUGTÜR MIT VERSTÄRKUNGSELEMENT**
VEHICLE DOOR WITH REINFORCING ELEMENT
PORTE DE VÉHICULE AVEC ÉLÉMENT DE RENFORT

(30) Priorität: 27.11.2009 DE 102009047253
(43) Veröffentlichungstag der Anmeldung: 03.10.2012
(73) Patentinhaber: ASMAG-Holding GmbH, 4645 Grünau im Almtal (AT)
(72) Erfinder: WELLNITZ, Jörg, 85137 Walting (DE)
(74) Vertreter: Ofner, Clemens
(86) Internationale Anmeldenummer: PCT/EP2010/068001
(87) Internationale Veröffentlichungsnummer: WO 2011/064197

(56) Entgegenhaltungen:
- FR-A1- 2 563 154
- JP-A- 2 223 440
- US-A- 4 664 955

## Beschreibung

Die Erfindung betrifft eine Kraftfahrzeugtür, insbesondere eine Kraftfahrzeug-Seitentür für ein Personenkraftfahrzeug.

Verbundmaterialien bzw. Verbundwerkstoffe aus jeweils einer oder mehreren Metall- und Kunststoffschichten haben mittlerweile eine breite Anwendung gefunden, wobei meist sandwichartige Strukturen (Schichtverbundmaterialien bzw. Laminate) in Mantel- oder Karosserieteilen eingesetzt werden. Beispiele hierfür sind Kunststoff/Metall-Verbundmaterialien, die in den letzten Jahren vor Allem von Flugzeugherstellern als Konstruktionsmaterial für Flugzeugrümpfe, Tragflächen oder Leitwerke verwendet wird. Verbundmaterialien zeichnen sich in der Regel dadurch aus, dass unterschiedliche Eigenschaften verschiedener Werkstoffe kombiniert werden können, wodurch es möglich wird, konträre Konstruktionsziele zu vereinen. Beispielsweise weisen moderne Verbundmaterialien eine hohe Zugfestigkeit, Biegesteifigkeit und Stabilität auf, während sie gleichzeitig auch hinsichtlich des Gewichts vorteilhaft gegenüber anderen Materialien sind.
Im Kraftfahrzeugbereich sind die Hersteller und Zulieferer immer bestrebt, mit verbesserten Materialien konkurrenzfähigere Kraftfahrzeuge zu bauen bzw. konkurrenzfähigere Produkte anzubieten. Dies betrifft z. B. Materialien, die ein verbessertes Crashverhalten aufweisen, die darüber hinaus vergleichsweise leicht sind, eine verbesserte Temperaturdämmung oder auch bessere Akustikwerte besitzen. Ferner gehen die Bestrebungen bei der Entwicklung dahin, die Insassensicherheit immer mehr zu erhöhen. So haben z. B. herkömmliche Fahrzeugtüren den Nachteil, dass sie im Bereich der Türscharniere oder im Bereich der Türschlösser vergleichsweise instabil sind, da in einem Crashfall in diesen Bereichen hohe Kräfte auf die Fahrzeugtür einwirken, die nach einem Unfall noch geöffnet können werden soll. Des Weiteren besteht in einer Vielzahl von industriellen Bereichen der Bedarf nach Energie- und Emissionsopimierung in Form von verbesserten Materialien, insbesondere auch zum Nachrüsten von bestehenden Einrichtungen.

Aus US 4664955 A ist eine Schichtzusammensetzung als Wandvertäfelung bekannt, die eine Polymerschicht aufweist, die auf beiden Seiten mit einer Metallfolie versehen ist. Auf diese Weise wird eine sandwichartige Struktur bereitgestellt, wobei zudem eine Schichtstruktur vorgesehen ist, die 70 bis 80 % eines natürlichen Gesteins und 20 bis 30 % eines Matrixmaterials aufweist.

Aus JP 02223440 A ist eine Schichtstruktur bekannt, bei der eine Wabenstruktur aus Aluminiumfolie beidseitig über einen Epoxidkleber mit einer Schicht aus rostfreiem Stahl bedeckt ist. Zudem ist eine Gesteinsschicht über eine weitere Klebeschicht mit einer oberen Stahlschicht verbunden.

Aus FR 2563154 A ist eine Kraftfahrzeugtür bekannt, wobei ein flächig ausgebildetes Verstärkungselement vorgesehen ist, das flächig mit der Kraftfahrzeugtür verbunden ist.

Es ist eine Aufgabe der vorliegenden Erfindung eine verbesserte Fahrzeugtür, wie z. B. eine Seitentür für ein Personenkraftfahrzeug, anzugeben. Hierbei soll die Fahrzeugtür ein verbessertes Crashverhalten besitzen und ggf. verbesserte Werte bei der Temperaturdämmung aufweisen und eine verbesserte Akustikverschalung zur Verfügung stellen.

Die Aufgabe der Erfindung wird mittels einer Kraftfahrzeugtür, insbesondere einer Kraftfahrzeug-Seitentür für ein Personenkraftfahrzeug, gemäß Anspruch 1.

Vorteilhafte Weiterbildungen der Erfindung ergeben sich aus den abhängigen Ansprüchen.

Die Aufgabe der Erfindung wird mittels einer verstärkten Kraftfahrzeugtür gelöst, wobei ein Verstärkungselement der Kraftfahrzeugtür eine Werkstoffschicht besitzt, die ein Gestein aufweist. Hierbei ist das Verstärkungselement mit der Kraftfahrzeugtür fest verbunden. In Ausführungsformen der Erfindung kann das flächige Verstärkungselement eine zweite Werkstoffschicht besitzen, die ein Metall oder eine Beschichtung umfasst. Bevorzugt ist das Verstärkungselement in einem Bereich eines Scharniers oder eines Schlosses der Kraftfahrzeugtür vorgesehen. Ferner ist es bevorzugt, dass das Verstärkungselement auf einer Innenseite der Kraftfahrzeugtür befestigt, insbesondere geklebt ist, da hierdurch das Verstärkungselement aufgrund einer später anzubringenden Türverschalung im Kraftfahrzeug nicht mehr sichtbar ist.

Die erfindungsgemäße Kraftfahrzeugtür zeichnet sich gegenüber dem Stand der Technik vor allem durch ein besseres Crashverhalten aus, da das erfindungsgemäße Verstärkungselement eine gute mechanische Belastbarkeit in Bezug auf Zugfestigkeit und Biegesteifigkeit besitzt. Ferner bieten erfindungsgemäße Verstärkungs- und Dämmelemente die Möglichkeit einer exzellenten Akustikverschalung und eine gute Temperaturdämmung. Darüber hinaus haben die Verstärkungs- und Dämmelemente eine gute mechanische Belastbarkeit in Bezug auf Zugfestigkeit, Materialermüdung, Biegesteifigkeit und Kerbschlagzähigkeit. Ein weiterer Vorteil liegt in der Verwendung von Gestein, denn dieses ist gut, preisgünstig und massenhaft verfügbar. Ferner ist Gestein einfach zu bearbeiten.

Gemäß der Erfindung ist das Gestein jeweils insbesondere ein Naturstein bzw. eine Natursteinlage, die bevorzugt aus einem natürlichen Gesteinsblock herausgearbeitet ist. Die jeweilige Werkstoffschicht, im Folgenden auch als Steinschicht und Metallschicht bzw. Beschichtung bezeichnet, kann jedoch auch noch andere Materialien aufweisen, d. h. selbst wiederum ein Verbundmaterial bzw. ein Durchdringungs-Verbundmaterial sein. Darüber hinaus kann das Verstärkungs- oder Dämmelement noch eine oder eine Mehrzahl von anderen Werkstoffschichten besitzen. Es ist jedoch bevorzugt, dass das Verstärkungselement für die Kraftfahrzeugtür nur aus diesen jeweils zwei Werkstoffschichten aufgebaut ist, einmal abgesehen von einer Verbindungsschicht zwischen diesen beiden Werkstoffschichten und einer Befestigungsschicht, mittels derer es auf der Kraftfahrzeugtür befestigt ist.

Es ist möglich, zusätzliche Schichten auch in einer anderen Reihenfolge innerhalb des erfindungsgemäßen Verstärkungs- oder Dämmelements vorzusehen. Diese können z. B. eine Mehrzahl von Metall- und/oder Steinschichten besitzen. Ferner können andere Schichten, wie eine Metallschaumschicht, vorzugsweise eine Aluminiumschaumschicht, eine Ringgeflechtschicht, vorzugsweise aus einem Kunststoff, und/oder eine Gewebeschicht vorgesehen sein. Des Weiteren ist es möglich, als jeweilige Außenschichten, abgesehen von der Befestigungsschicht, eine beschichtete Steinschicht vorzusehen. Durch diese Maßnahmen können die Eigenschaften des Verstärkungs- oder Dämmelements gezielt beeinflusst und auf bestimmte Anwendungsfälle "zugeschnitten" werden.

Die Verbindungs- bzw. Befestigungsschicht des erfindungsgemäßen Verstärkungs- oder Dämmelements kann dabei eine Klebstoffschicht sein. Für den Fall das eine Metallschicht und eine Steinschicht mittels eines Ultraschall-Fügeverfahrens aneinander festgelegt sind, ist die Verbindungsschicht das dabei zwischen der Metallschicht und der Steinschicht entstehende Durchdringungs-Verbundmaterial. Für den Fall einer beschichteten Steinschicht, ist es bevorzugt, dass die Beschichtung, eine Filmbeschichtung ist, die insbesondere eine PET-Filmbeschichtung und bevorzugt eine aufgeschrumpfte PET-Folie ist.

Die Metallschicht kann Aluminium, Magnesium, Titan, Eisen oder Stahl aufweisen bzw. aus Legierungen mit diesen Metallen bestehen. Andere Metalle bzw. Metalllegierungen können natürlich angewendet werden. Die Steinschicht weist bevorzugt einen Magmatit, einen Sedimentit oder einen Metamorphit, insbesondere einen Gabbro, einen Granit, einen Quarzit oder ein Basaltgestein auf. Andere als die letztgenannten Gesteine sind erfindungemäß ebenfalls anwendbar, wobei ein feinkörniges Gestein, insbesondere ein feinkörniger Gabbro oder Granit bevorzugt sind. Darüber hinaus kann gemäß der Erfindung auch ein Kunststein angewendet werden.

In bevorzugten Ausführungsformen der Erfindung ist eine Schichtdicke der Metallschicht geringer als eine Schichtdicke der Steinschicht. Bevorzugt beträgt die Schichtdicke der Steinschicht ca. das 8- bis 10-fache, insbesondere das 6- bis 7-fache, insbesondere bevorzugt das 4- bis 5-fache und insbesondere besonders bevorzugt das 2- bis 3-fache der Schichtdicke der Metallschicht. Eine Dicke der Beschichtung ist bevorzugt um ein vieles dünner als die Schichtdicke der Metallschicht bzw. der Steinschicht. In Ausführungsformen der Erfindung kann in die Metallschicht eine Flüssigkeit eingesickert sein, oder die Metallschicht ist eine getränkte Schicht, die bevorzugt als eine Sperrschicht gegen Flüssigkeiten ausgebildet ist.

Die Erfindung wird im Folgenden anhand von Ausführungsbeispielen unter Bezugnahme auf die beigefügte Zeichnung näher erläutert. In der schematischen Zeichnung zeigen:
- Fig. 1: eine zweidimensionale, oben abgeschnittene Seitenansicht einer beispielhaften Darstellung einer erfin-dungsgemäßen Kraftfahrzeug-Seitentür;
- Fig. 2: eine zweiseitig abgeschnittene Querschnittsansicht durch eine erste und eine zweite Ausführungsform einer erfindungsgemäßen Kraftfahrzeugtür;
- Fig. 3: eine zweiseitig abgeschnittene Querschnittsansicht durch eine dritte Ausführungsform der erfindungsgemäßen Kraftfahrzeugtür;
- Fig. 4: eine erste und eine zweite Ausführungsform eines Verstärkungs- oder Dämpfungselements, in einer zweiseitig abgeschnittenen Querschnittsansicht;
- Fig. 5: eine zur Fig. 4 analoge Darstellung einer dritten Ausführungsform des Verstärkungs- oder Dämpfungselements;
- Fig. 6: eine erste und eine zweite Ausführungsform eines Klebeelements oder Klebebands, in einer zweiseitig abgeschnittenen Querschnittsansicht; und
- Fig. 7: eine zur Fig. 6 analoge Darstellung einer dritten Ausführungsform des Klebeelements oder Klebebands.

Die Erfindung - eine Kraftfahrzeugtür - wird im Folgenden in der Anwendung auf den Kraftfahrzeugbau, insbesondere den Karosseriebau, näher erläutert.

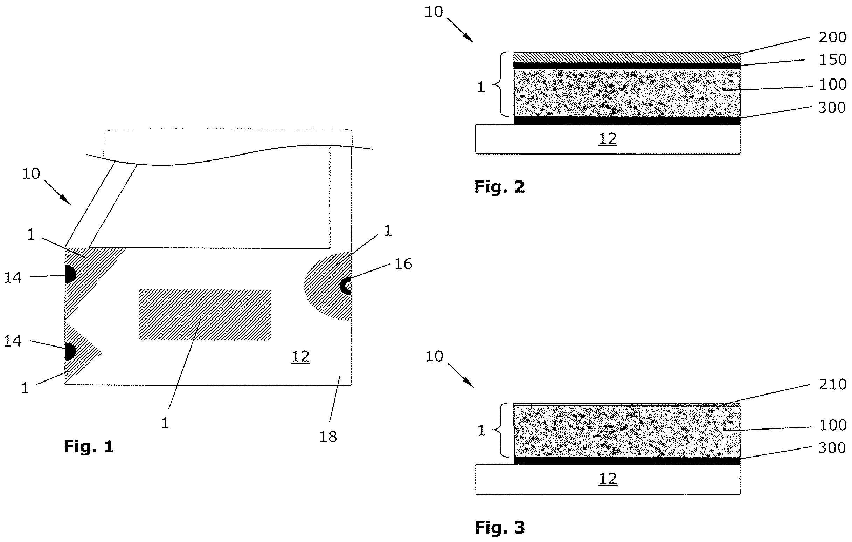

Die Fig. 1 zeigt beispielhaft eine erfindungsgemäße Kraftfahrzeug-Seitentür 10 mit einer Mehrzahl von Verstärkungselementen 1 auf einer Innenseite eines Türblechs 12 der Kraftfahrzeugtür 10. Anzahl, Form und Position der Verstärkungselemente 1 können dabei beliebig sein. Es ist jedoch bevorzugt, ein solches Verstärkungselement 1 im Bereich eines Türscharniers 14 und/oder eines Türschlosses 16 vorzusehen. Ferner ist es bevorzugt, in einem Zentralbereich des Türblechs 12, ein vergleichsweise großes Verstärkungselement 1 vorzusehen. Die erfindungsgemäße Kraftfahrzeugtür 10 kann schon bei deren Herstellung oder nachträglich mit dem Verstärkungselement 1 versehen werden.

Die Fig. 2 und 3 zeigen die Kraftfahrzeugtür 10 jeweils im Schnitt, wobei drei Ausführungsformen des Verstärkungselements 1 dargestellt sind. Alle drei Ausführungsformen weisen eine erste Werkstoffschicht 100 und eine zweite Werkstoffschicht 200 (Fig. 2), 210 (Fig. 3) auf. Hierbei sind die beiden Werkstoffschichten 100; 200, 210 aneinander flächig festgelegt, d. h. im Wesentlichen alle Oberflächenbereiche der ersten Werkstoffschicht 100 sind mit den betreffenden Oberflächenbereichen der zweiten Werkstoffschicht 200, 210 fest verbunden.

Die erste Werkstoffschicht 100 weist bei allen drei Ausführungsformen gemäß der vorliegenden Erfindung ein Gestein 100 bzw. eine Steinschicht 100, beispielsweise einen Magmatit, einen Sedimentit oder einen Metamorphit auf. Bevorzugt sind Magmatite, insbesondere Plutonite und Vulkanite, wie Basaltgesteine, Granite, Gabbros (Mikrogabbro), Quarzite und Feldspat. Extra genannt sei hier der "Nero Assoluto Zimbabwe", ein feinkörniger, schwarzer Gabbro (Norit). Jedoch können Quarz, Glimmer, Marmor, Speckstein und/oder Kalkstein und/ oder Kombinationen davon ebenfalls angewendet werden.

Die erste Werkstoffschicht 100 kann aus einer Lage des Gesteins bestehen, die aus einem Block des Gesteins herausgearbeitet, beispielsweise geschnitten ist. Der Gesteinblock wird dabei in einem Steinbruch aus einem natürlichen Vorkommen des Gesteins gewonnen, d. h. abgebaut. Nach dem Schneiden kann die Schicht gedünnt werden, um eine erste Werkstoffschicht 100 mit gewünschter Dicke zu erhalten. Dies kann z. B. durch Schleifen erfolgen. Aber auch künstlich hergestellte Gesteine können gemäß der Erfindung angewendet werden.

Die zweite Werkstoffschicht 200 der ersten beiden Ausführungsformen weist gemäß der vorliegenden Erfindung ein Metall 200 bzw. eine Metallschicht 200, z. B. Aluminium, Magnesium, Titan, Eisen, Stahl, Chrom, Wolfram, Vanadium, Molybdän und/oder Nickel auf. Ferner kann diese Schicht Kohlenstoff aufweisen. Die zweite Werkstoffschicht 210 der dritten Ausführungsformen ist gemäß der vorliegenden Erfindung eine Beschichtung 210 bzw. Folienschicht 210. Die flächig anhaftende Beschichtung 210 kann als eine Folien- 210 oder Filmbeschichtung 210, insbesondere eine PET-Filmbeschichtung 210, ausgebildet sein, die bevorzugt eine aufgeschrumpfte PET-Folie 210 ist.

Die Steinschicht 100 und die Metallschicht 200 können z. B. durch ein Ultraschall-Fügeverfahren, wie z. B. einem Ultraschall-Schweißverfahren miteinander verbunden werden, wobei sich zwischen den beiden Werkstoffschichten 100, 200 eine als Schweißbereich ausbildete Verbindungsschicht 150 bildet (Fig. 2), in welchem sich die beiden Werkstoffe 100, 200 gegenseitig durchdringen und so einen flächigen Halt der Metallschicht 200 an der Steinschicht 100 garantieren. Statt durch ein Ultraschall-Fügeverfahren können diese beiden Schichten 100, 200 miteinander verklebt sein, was ebenfalls in der Fig. 2 mit der Verbindungsschicht 150 dargestellt sein soll. Die Verbindungsschicht 150 weist dabei einen Klebstoff, bevorzugt einen Acrylharz-Klebstoff, wie z. B. SikaFast® 5221, einen Epoxydharz-, einen Hochtemperatur- oder einen Keramik-Klebstoff auf.

Bei allen drei Ausführungsformen der Kraftfahrzeugtür 10 ist es bevorzugt, das das Verstärkungselement 1 auf die Kraftfahrzeugtür 10 geklebt ist. Dies erfolgt durch eine als Klebstoffschicht 300 ausgebildete Befestigungsschicht 300. Ein hierfür verwendbarer Klebstoff kann einer der oben genannten sein. Bei allen Ausführungsformen des Verstärkungselements 1 ist es bevorzugt, dass die Steinschicht 100 zwischen dem Türblech 12 und der Metallschicht 200 bzw. der Beschichtung 210 angeordnet ist.

Eine Schichtdicke der Steinschicht 100 beträgt 0,3 bis 4,5mm, bevorzugt 0,6 bis 4mm, insbesondere 1 bis 3,5mm, insbesondere bevorzugt 1,5 bis 3mm und insbesondere besonders bevorzugt 2 bis 2,5mm; jeweils ±0,3mm. Eine Schichtdicke der Metallschicht 200 beträgt 0,2 bis 2mm, bevorzugt 0,35 bis 1,5mm, insbesondere 0,5 bis 1,2mm, insbesondere bevorzugt 0,7 bis 1,2mm und insbesondere besonders bevorzugt 1mm; jeweils ±0,1mm. Abhängig von der Anwendung können die Steinschicht 100 und/oder Metallschicht 200 auch andere Dicken aufweisen. Eine Dicke der Beschichtung 210 beträgt bevorzugt 8 bis 120µm und insbesondere 12 bis 50µm. Eine Dicke der Verbindungsschicht 150 beträgt bevorzugt 0,01 bis 1mm und insbesondere 0,1 bis 0,5mm. Bevorzugt sind die angegebenen Dicken mittlere Dicken.

Bevorzugte Formen des Verstärkungselements 1 haben runde Kanten und/oder Eckbereiche. Eckbereiche, insbesondere mit einem rechten Winkel, sind deswegen bevorzugt, weil diese bis an zwei Ränder der Kraftfahrzeugtür 10 heranreichen können und so im Bereich eines Türscharniers 14 (Fig. 1 links oben) bzw. eine Türschlosses 16 (nicht dargestellt) reichen können. Ferner sind für solche Anwendungen dreieckige (Fig. 1 links unten) oder halb-elliptische (Fig. 1 rechts oben) bzw. halbrunde Verstärkungselemente 1 anwendbar. Für vergleichsweise zentral anzubringende Verstärkungselemente 1 sind rechteckige Formen, ggf. mit abgerundeten Eckbereichen, bevorzugt (Fig. 1 Mitte). In einem freien Eckbereich der Kraftfahrzeugtür 10 befindet sich bevorzugt kein Verstärkungselement 1.

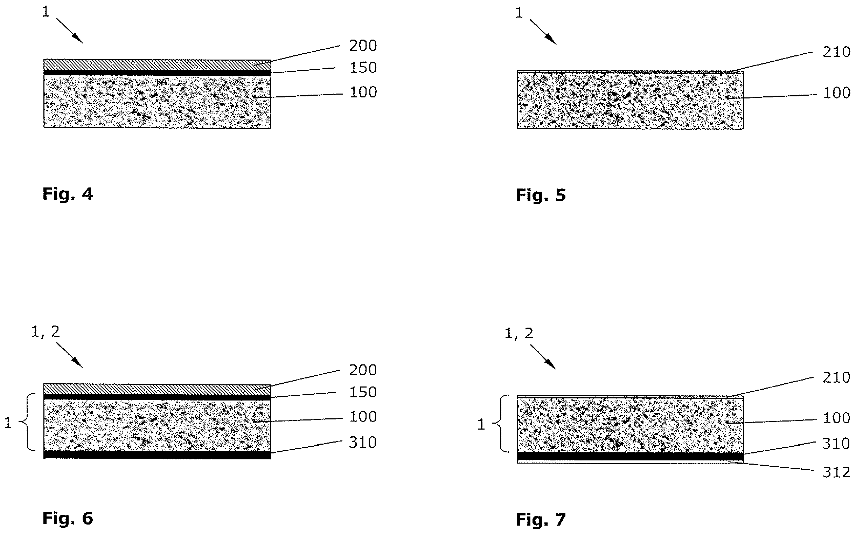

Die oben genannten Beispiele und Abmessungen des Verstärkungselements 1, also die erste Werkstoffschicht 100 (Steinschicht 100), die zweite Werkstoffschicht 200, 210 (Metallschicht 200 oder Beschichtung 210) und die Verbindungsschicht 150 seien an dieser Stelle stellvertretend für alle Ausführungsformen der vorliegenden Erfindung genannt, d. h. sie können auch auf die nachfolgend beschriebenen erfindungsgemäßen Verstärkungselemente 1 bzw. erfindungsgemäßen Dämmelemente 1 übertragen werden. D. h. diese Verstärkungs- 1 bzw. Dämmelemente 1 sind wie die obigen Verstärkungselemente der Kraftfahrzeugtür 10 aufgebaut, wobei bei ihnen die Befestigungsschicht 300 fehlt, siehe Fig. 4 und 5.

Damit diese ihren erfindungsgemäßen Aufgaben nachkommen können, müssen sie noch auf einem Untergrund bzw. einem Bauteil befestigt werden, wobei es bei der Befestigung einer beschichteten Steinschicht 100 (Fig. 7) bevorzugt ist, diese auf einer metallischen Unterlage vorzusehen. Dies erfolgt wiederum flächig und bevorzugt mittels einer Klebstoffschicht 300. Jedoch ist es z. B. durchaus möglich, ein Verstärkungs-1 bzw. Dämmelement 1 gemäß Fig. 4, mittels eines Ultraschall-Fügeverfahrens auf einem Untergrund zu befestigen. Dies lässt sich statt der Klebstoffschicht 300 in einer Ausführungsform der Fig. 2 auch auf die Kraftfahrzeugtür 10 anwenden.

Die Fig. 6 und 7 zeigen nun Weiterentwicklungen des Verstärkungs- 1 bzw. Dämmelements 1. Diese weisen an der Steinschicht 100 eine Klebstoff- 310, insbesondere eine Haftklebstoffschicht 310 auf, die durch eine Abdeckfolie 312 oder ein Zwischenband 312 bzw. eine Zwischenlage 312 (Fig. 7) abgedeckt sein kann. Hierdurch ergibt sich erfindungsgemäß ein Klebeelement 2 oder Klebeband 2, das z. B. als ein Tape 2 oder Tapeelement ausgebildet sein kann. Ein solches Element 2 ist universell einsetzbar und kann, natürlich in Abhängigkeit von einer Dicke, individuell zurechtgeschnitten werden.

Ein wesentliches Merkmal des Verstärkungs- 1, 2 bzw. Dämmelements 1, 2 - neben der Kombination von Metall (ggf. als ein Untergrund, wie z. B. die Kraftfahrzeugtür in Fig. 3) mit einem Gestein - ist die vom Untergrund abseits liegende Beschichtung 210 (Fig. 3, 5, 7) bzw. Metallschicht 200 (Fig. 2, 4, 6), die in einem Belastungsfall das Aufbrechen der Steinschicht 100 verhindert und so eine Integrität des Verbundmaterials 1, 2 (Verstärkungs- 1, 2 bzw. Dämmelement 1, 2) sicherstellt, welches dabei seine Eigenschaften beibehält. Im Belastungsfall verteilt sich eine punktuell oder flächig eingeleitete Kraft homogen in der Beschichtung 210 bzw. der dünnen Metallschicht 200, die dadurch mechanischen Belastungen gut standhalten kann.

Die Steinschicht 100 und/oder die Metallschicht 200 können auch noch andere Bestandteile aufweisen, sodass diese Werkstoffschichten 100, 200 im erfindungsgemäßen Verstärkungs- 1, 2 bzw. Dämmelement 1, 2 selbst z. B. Durchdringungs-Verbundmaterialien sind. Es ist jedoch bevorzugt, von einem gegenseitigen Verbindungsbereich 150, z. B. aufgrund eines Ultraschall-Fügeverfahrens, einmal abgesehen, dass die Steinschicht 100 eine Schicht aus einem reinen, handelsüblichen Gestein ist und die Metallschicht 200 eine Schicht aus einem reinen, handelsüblichen Metall bzw. eine Metalllegierung ist.

Neben den dargestellten Ausführungsformen kann das Verstärkungs- 1, 2 bzw. Dämmelement 1, 2 eine Vielzahl von weiteren Ausführungsformen besitzen. Hierbei ist die Abfolge bisher bekannter und anderer Schichten nahezu beliebig. Es ist jedoch einerseits bevorzugt, dass die Steinschicht 100 an einer Seite, die nicht unbedingt eine Außenseite sein muss, die Metallschicht 200 oder die Beschichtung 210 aufweist. Andererseits ist es bevorzugt, dass die Steinschicht 100 unmittelbar benachbart dazu eine Metallschicht 200 aufweist. So können sich eine Mehrzahl von Stein- 100 und Metallschichten 200 abwechseln, wobei eine freie Seite einer Steinschicht 100 eine Beschichtung 210 aufweisen kann. Durch die sandwichartige Struktur einer solchen Ausführungsform wird in vorteilhafter Weise ein Verbundmaterial 1, 2 geschaffen, das die bereits erwähnten vorteilhaften Eigenschaften in einem höheren Maße besitzt.

Ferner kann das Verstärkungs- 1, 2 bzw. Dämmelement 1, 2 eine Metallschaumschicht aufweisen (in der Zeichnung nicht dargestellt). Die Metallschaumschicht kann vorzugsweise einen Aluminiumschaum aufweisen und auch einstückig mit der Metallschicht 200 gefertigt sein. Hierfür wird ein Teil einer Metallschicht aufgeschäumt, wobei ein nicht aufgeschäumter Abschnitt die Metallschicht 200 bereitstellt. Die Metallschaumschicht erhöht die mögliche Energieaufnahme des Verbundmaterials 1, 2 wesentlich, da es durch die schaumartige Gestaltung wie eine Knautschzone wirken kann. Während der Gewichtseinfluss der Metallschaumschicht nicht wesentlich auffällt, kann das erfindungsgemäße Vorsehen der Metallschaumschicht dazu führen, dass die Kerbschlagzähigkeit und die Aufnahme von Querkräften verbessert ist.

Des Weiteren kann das Verbundmaterial 1, 2 eine Ringgeflechtschicht aufweisen (in der Zeichnung nicht dargestellt). Die Ringgeflechtschicht kann vorzugsweise ein Kunststoffgeflecht, beispielsweise aus einem Epoxydharz, welches eine Glasfaserverstärkung aufweisen kann, umfassen. Die Ringgeflechtschicht verstärkt eine Stabilität des Verstärkungs- 1, 2 bzw. Dämmelements 1, 2 wesentlich, während der Gewichtseinfluss der Ringgeflechtschicht kaum auffällt. Darüber hinaus kann das Verbundmaterial 1, 2 mittels einem Gewebe (ebenfalls in der Zeichnung nicht dargestellt), insbesondere einem Textilgewebe verstärkt sein. Das Gewebe kann dabei in der bevorzugt als Klebstoffschicht 150 ausgebildeten Verbindungsschicht 150 angeordnet sein. Als Textilgewebe kann beispielsweise ein Twintex^{®} oder ein Gewebe der Art Atlas 1:1 und 1:4 in der Ausprägung mit Karbon-, Glas- und/oder Aramidfasern eingesetzt werden. Eine Gewebeverstärkung kann dadurch erreicht werden, dass das Textilgewebe als Gestricke, Gewirke, Gelege oder Geflecht eingesetzt wird.

In einer Ausführungsform der Erfindung kann in das Gestein, d. h. die Steinschicht 100, eine Flüssigkeit eingesickert sein, um deren mechanische und/oder chemische Eigenschaften zu verändern. Beispielsweise kann durch das Einsickern einer Flüssigkeit erreicht werden, dass die Steinschicht 100 eine höhere mechanische Festigkeit besitzt. Hierzu kann eine Flüssigkeit mit zwei Komponenten, z. B. aus Bisphenol-A-Epichlorhydrinharz und einer 1,3-Cyclohexandimethanamin-Mischung verwendet werden, um eine Oberflächenvergütung zu erreichen bzw. die Festigkeit der Steinschicht 100 zu erhöhen.

Die Flüssigkeit kann z. B. nach einem Dünnschleifprozess auf die Steinschicht 100 aufgetragen werden. Das Auftragen kann z. B. mithilfe einer Zahnspachtel, eines Pinsels oder einem Tuch erfolgen. Beim Auftragen kann die Steinschicht 100 eine über der Raumtemperatur liegende Temperatur aufweisen, die z. B. im Bereich zwischen 40 bis 70°C, insbesondere zwischen 50 und 60°C, liegt, wodurch das Auftragen und das Einsickern unterstützt wird.

Des Weiteren kann das Einsickern einer Flüssigkeit dazu verwendet werden, die Klebstoffschicht 150 gegenüber Umwelteinflüssen zu schützen. Dabei wird z. B. die Flüssigkeit auf diejenige Seite der Steinschicht 100 aufgetragen, auf welcher der Klebstoff, aufgetragen wird. Als Flüssigkeit wird z. B. eine wasserabweisende Flüssigkeit verwendet, die vorzugsweise zudem ein Durchsickern einer Flüssigkeit zur Klebstoffschicht 150 verhindert. Auf diese Weise wird eine mit Flüssigkeit angereicherte Sperrschicht (in der Zeichnung nicht dargestellt) in der Steinschicht 100 eingerichtet.

Bei der Dünnbearbeitung der Steinschicht 100 ist es erforderlich, dass Kühlflüssigkeit für den Schleifvorgang auf die Steinschicht 100 aufgebracht wird. Dabei wird z. B. ein Gemisch aus Wasser und Öl verwendet. Nach der Dünnbearbeitung ist die Steinschicht 100 vollständig zu trocknen, um ein Einsickern der Kühlflüssigkeit zu verhindern. Wird dies nicht erreicht, so besteht die Gefahr, dass die Kühlflüssigkeit die Klebstoffschicht 150 angreift und dadurch die Klebekraft nachlassen kann.

Um diesem Problem vorzubeugen, wird, wie oben erläutert, die Steinschicht 100 auf der Klebeseite mit einer Flüssigkeit vor dem Kleben (oder auch vor dem Schleifen) vorbehandelt. Dabei sickert die Flüssigkeit in das Gestein ein und bildet eine Sperrschicht. Nach dem Verkleben der Steinschicht 100 mit der Metallschicht 200 oder einer weiteren Schicht wird die Steinschicht 100 von der freien Seite her abgetragen. Anschließend kann z. B. der Klebstoff 300 bzw. der Haftklebstoff 300 oder auch eine Beschichtung 210 aufgebracht werden. Es ist auch möglich, diejenige Seite der Steinschicht 100 mit der Sperrschicht zu versehen, auf welcher die Steinschicht 100 dünngeschliffen wird. Hierbei verhindert die Sperrschicht dann ein Eindringen von Kühlflüssigkeit in die Steinschicht 100, natürlich nur solange wie, die Sperrschicht auch noch vorhanden ist.

Als Flüssigkeit hierfür kann beispielsweise eine polymerhaltige Flüssigkeit angewendet werden, die direkt vor dem Klebevorgang auf eine gereinigte Seite der Steinschicht 100 aufgetragen wird. Das Auftragen kann mittels Pinsel, Tuch oder maschinell z. B. bei Raumtemperatur und einem erhöhten Anpressdruck erfolgen. Eine solche Sperrschicht kann in den verschiedensten Ausführungsformen von Verstärkungs- 1, 2 bzw. Dämmelementen 1, 2 vorgesehen sein.

## Patentansprüche

1. Kraftfahrzeugtür, insbesondere Kraftfahrzeug-Seitentür für ein Personenkraftfahrzeug, mit einem flächig ausgebildeten Verstärkungselement (1), **dadurch gekennzeichnet, dass** das Verstärkungselement (1) eine erste Werkstoffschicht (100) besitzt, die ein Gestein aufweist, und das Verstärkungselement (1) flächig mit der Kraftfahrzeugtür (10) verbunden ist.

2. Kraftfahrzeugtür gemäß Anspruch 1, wobei das Verstärkungselement (1) eine zweite Werkstoffschicht (200, 210) besitzt, die ein Metall (200) oder eine Beschichtung (210) aufweist, und
das Verstärkungselement (1) bevorzugt auf eine Innenseite der Kraftfahrzeugtür (10) insbesondere in einem Bereich eines Türscharniers (14) oder eines Türschlosses (16) geklebt ist.

3. Kraftfahrzeugtür gemäß Anspruch 1 oder 2, wobei das Verstärkungselement (1) oder das Dämmelement (1) mit einer von der zweiten Werkstoffschicht (200, 210) abgewandten Seite der ersten Werkstoffschicht (100) an/auf der Kraftfahrzeugtür (10) befestigt ist bzw. an/auf einem Bauteil oder Untergrund befestigbar ist.

4. Kraftfahrzeugtür gemäß einem der Ansprüche 2 oder 3, wobei die erste (100) und die zweite Werkstoffschicht (200) mittels einer Verklebung (150) aneinander festgelegt sind, oder
die Beschichtung (210), eine Filmbeschichtung (210) ist, die insbesondere eine PET-Filmbeschichtung (210), bevorzugt eine aufgeschrumpfte PET-Folie (210) ist.

5. Kraftfahrzeugtür gemäß einem der Ansprüche 2 bis 4, wobei eine Verbindungsschicht (150) zwischen erster und zweiter Werkstoffschicht (100; 200, 210) einen Klebstoff, bevorzugt einen Acrylharz-Klebstoff, einen Epoxydharz-Klebstoff, einen Hochtemperatur-Klebstoff oder einen Keramik-Klebstoff aufweist.

6. Kraftfahrzeugtür gemäß einem der Ansprüche 2 bis 5, wobei die erste Werkstoffschicht (100) an einer von der zweiten Werkstoffschicht (200, 210) abgewandten Seite einen Klebstoff, insbesondere einen Haftklebstoff (310), aufweist.

7. Kraftfahrzeugtür gemäß einem der Ansprüche 2 bis 6, wobei eine Schichtdicke der ersten Werkstoffschicht (100) größer als eine Schichtdicke der zweiten Werkstoffschicht (200) ist.

8. Kraftfahrzeugtür gemäß einem der Ansprüche 2 bis 7, wobei das Metall Aluminium, Magnesium, Titan, Eisen oder Stahl aufweist, und/oder
das Gestein einen Magmatit, einen Sedimentit oder einen Metamorphit, insbesondere einen Gabbro, einen Granit, einen Quarzit oder ein Basaltgestein aufweist.

## Claims

1. A motor vehicle door, in particular a motor vehicle side door for a passenger vehicle, having a reinforcing element (1) configured in planar fashion, **characterized in that** the reinforcing element (1) has a first material layer (100) exhibiting a stone, and the reinforcing element (1) is connected to the motor vehicle door (10) in planar fashion.

2. The motor vehicle door according to claim 1, wherein the reinforcing element (1) has a second material layer (200, 210) which comprises a metal (200) or a coating (210) and the reinforcing element (1) is preferably bonded to an inner side of the motor vehicle door (10), in particular in a region of a door hinge (14) or a door lock (16).

3. The motor vehicle door according to claim 1 or 2, wherein the reinforcing element (1) or the insulating element (1) is fastened to/on the motor vehicle door (10) by a side of the first material layer (100) facing away from the second material layer (200, 210) or else it can be fastened to/on a component or a base.

4. The motor vehicle door according to one of claims 2 or 3, wherein the first (100) and the second material layer (200) are secured to one another by means of bonding (150) or the coating (210) is a film coating (210) which is, in particular, a PET film coating (210), preferably a shrink-fitted PET film (210).

5. The motor vehicle door according to one of claims 2 to 4, wherein a connecting layer (150) between the first and second material layer (100; 200, 210) comprises an adhesive, preferably an acrylic resin adhesive, an epoxy resin adhesive, a high-temperature adhesive or a ceramic adhesive.

6. The motor vehicle door according to one of claims 2 to 5, wherein the first material layer (100) exhibits on a side facing away from the second material layer (200, 210) an adhesive, in particular a pressure-sensitive adhesive (310).

7. The motor vehicle door according to one of claims 2 to 6, wherein a layer thickness of the first material layer (100) is greater than a layer thickness of the second material layer (200).

8. The motor vehicle door according to one of claims 2 to 7, wherein the metal comprises aluminium, magnesium, titanium, iron or steel and/or the stone is a magmatite, sedimentary or metamorphic, in particular a gabbro, a granite, a quartzite or a basalt stone.

## Revendications

1. Portière de véhicule automobile, en particulier portière latérale de véhicule automobile pour un véhicule particulier, comportant un élément de renfort (1) réalisé de forme plane, **caractérisée en ce que** l'élément de renfort (1) possède une première couche de matériau (100) qui présente une roche, et l'élément de renfort (1) est relié en surface à la portière de véhicule automobile (10).

2. Portière de véhicule automobile selon la revendication 1, dans laquelle l'élément de renfort (1) possède une deuxième couche de matériau (200, 210) qui présente un métal (200) ou un revêtement (210), et l'élément de renfort (1) est fixé par adhérence de préférence sur un côté intérieur de la portière de véhicule automobile (10), en particulier dans la zone d'une charnière de portière (14) ou d'une serrure de portière (16).

3. Portière de véhicule automobile selon la revendication 1 ou 2, dans laquelle l'élément de renfort (1) ou l'élément isolant (1) est fixé à un côté de la première couche de matériau (100) opposé à la deuxième couche de matériau (200, 210) au niveau de/sur la portière de véhicule automobile (10), ou peut être fixé au niveau de/sur un composant ou un support.

4. Portière de véhicule automobile selon la revendication 2 ou 3, dans laquelle les première (100) et deuxième (200) couches de matériau sont fixées l'une à l'autre au moyen d'un matériau de collage (150), ou le revêtement (210) est un revêtement en film (210), en particulier un revêtement en film de PET (210), de préférence une feuille de PET (210) rétractable.

5. Portière de véhicule automobile selon l'une quelconque des revendications 2 à 4, dans laquelle une couche de liaison (150) présente un matériau adhésif entre les première et deuxième couches de matériau (100 ; 200, 210), de préférence un adhésif à base de résine acrylique, un adhésif à base de résine époxy, un adhésif haute température ou un adhésif à base de céramique.

6. Portière de véhicule automobile selon l'une quelconque des revendications 2 à 5, dans laquelle la première couche de matériau (100) présente un matériau adhésif sur un côté opposé à la deuxième couche de matériau (200, 210), en particulier un matériau adhésif sensible à la pression (310).

7. Portière de véhicule automobile selon l'une quelconque des revendications 2 à 6, dans laquelle une épaisseur de couche de la première couche de matériau (100) est plus importante qu'une épaisseur de couche de la deuxième couche de matériau (200).

8. Portière de véhicule automobile selon l'une quelconque des revendications 2 à 7, dans lequel le métal est de l'aluminium, du magnésium, du titane, du fer ou l'acier, et/ou la roche est une roche magmatique, sédimentaire ou métamorphique, en particulier un gabbro, un granit, un quartzite ou une roche de basalte.
